# EUROPEAN PATENT APPLICATION

(11) **EP 4 321 479 A1**
(43) Date of publication of application: **14.02.2024**
(21) Application number: 22852611.7
(22) Date of filing: 12.04.2022
(51) Int. Cl.: C01B 3/38, C01B 3/26

(54) **HYDROCARBON-DEGRADING STRUCTURAL CATALYST DESIGNING AND POSITIONING METHOD, HYDROCARBON DEGRADATION REACTION APPARATUS MANUFACTURING METHOD, HYDROCARBON DEGRADATION REACTION APPARATUS, AND REACTOR FURNACE**

(30) Priority: 04.08.2021 JP 2021127874; 06.12.2021 JP 2021198150
(71) Applicant: Ihara Co., Ltd., Toyokawa-City, Aichi 441-0105 (JP)
(72) Inventor: IHARA Ryoseki, Toyokawa-City, Aichi 441-0105 (JP)
(74) Representative: Dennemeyer & Associates S.A.
(86) International application number: PCT/JP2022/017567
(87) International publication number: WO 2023/013182

(57) **Abstract**

To provide a method for designing and arranging a structural catalyst for the decomposition of hydrocarbons, a reactor for the decomposition of hydrocarbons, a reaction furnace and a method for manufacturing the same for realizing more effective heat utilization compared to the conventional technique.

Provided is the reactor 61a for the decomposition of hydrocarbons comprising: a structural catalyst for the decomposition of hydrocarbons 19 having a structure in which a reaction gas may flow from one end to the other end when installed properly in a reaction chamber; and the heat source 67 that is installed inside or outside said reaction chamber and capable of heating said structural catalyst for the decomposition of hydrocarbons 19, wherein said structural catalyst for the decomposition of hydrocarbons 19 has a shape encompassing a boundary wall surface or a boundary side that separates said structural catalyst for the decomposition of hydrocarbons 19 from said heat source 67 when viewed from a cross-section vertical to a direction of flowing a reaction gas, as well as the reaction furnace 62 in which said reactor 61a is embedded together with a catalyst module 61b.

## Description

### [Technical Field]

The present invention relates to a method for designing and arranging structural catalyst for decomposition of hydrocarbons, method for producing reactor for decomposition of hydrocarbons, reactor for decomposition of hydrocarbons and reaction furnace.

### [Background Art]

For years, it is known that there are four ways of transmitting heat to a catalyst: direct heating; heat conduction; convection and heat radiation.

Among others, heat radiation is known to be excellent for heating a catalyst separated from a space with poor heat conductivity, as you can see that sun light comes to your skin passing over cosmic space with no heat conduction and atmosphere with poor heat conductivity (Patent Literature 1).

Pyrolysis reaction generating hydrogen from natural gas or naphtha is an endothermic reaction. In particular, steam modification reaction is a great endothermic reaction. Therefore, it is required to effectively heat catalyst. There are many investigations and proposals for reaction furnace structure that mainly focus on the effective utilization of heat (Patent Literature 2 and Patent Literature 3).

| | |
|---|---|
| Steam modification: CH₄+2H₂O→4H₂+CO₂ | ΔH = -165kJ/mol-H₂ |
| Direct decomposition: CH₄→2H₂+C | ΔH = -76kJ/mol-H₂ |

If steam modification catalyst is a particulate catalyst, it is filled in a certain space that is usually partitioned by separate walls and through which a raw material gas flows. Heat from a burner transmits to the separate walls, from which transmits via convection of the raw material gas to one particulate catalyst, from which transmits via heat radiation or convection of the raw material gas etc. to the other particulate catalyst filled therein (Non-Patent Literature 1). Such a catalyst-bed reaction furnace system has poor heat efficiency since heat conduction in a catalyst layer is mainly the convection heat transfer via fluid, and thus it is poor in heat efficiency, and it is required to preheat a raw material gas (hydrocarbons and steam) up to around 500°C (e.g. Patent Literature 5 and Patent Literature 6 etc.). Such system also causes significant pressure loss in a catalyst layer. There is a problem of the responsiveness during load change or starting-up in the system as well as the poor following capability to temperature elevation or change of the reaction field. Furthermore, the apparatus may become bigger in accordance with a longer reaction tube for supplying heat to the catalyst therein.

### [Prior Art Document]

### [Patent Literature]

[Patent Literature 1] Japanese Unexamined Patent Application Publication No. H6-229530
[Patent Literature 2] Japanese Unexamined Patent Application Publication No. 2001-031403
[Patent Literature 3] Japanese Unexamined Patent Application Publication No. 2000-178004
[Patent Literature 4] International Publication No. 2020/090245, FIG. 7b
[Patent Literature 5] Japanese Unexamined Patent Application Publication No. 2004-83332
[Patent Literature 6] National Publication of International Patent Application No. 2019-529318

### [Non-Patent Literature]

[Non-Patent Literature 1] Fukuhara, "Development of metal honeycomb-type structural catalyst for modification of hydrocarbons and Application for a small size hydrogen production device", ENEOS Technical Review, Vol. 53, No. 3, pages 94-100

### [Summary of Invention]

### [Problem to be solved by the invention]

In heating a plate-shaped catalyst for steam modification, what is proposed is to: a method of firstly heating the reaction gas by a heater located along the circumference or the vertical center line of a reaction furnace, and then heating the entire catalyst 59 via the high-temperature reaction gas (Patent Literature 2, Patent Literature 4, FIG. 10); and a method of disposing a structural catalyst in direct contact with a heater separation wall and heating the catalyst by direct heat transfer (Non-Patent Literature 1). Supposing that the catalytic reaction only takes place near a fluid film proximal to a surface of the structural catalyst and the heated reaction gas outside the fluid film does not contribute to the reaction, the former method causes an increased energy loss, and more efficient heating method is required. Further, the latter method has a problem of the compatibility of heater separation wall with the catalytic component, a problem of the need for the whole replacement of the heater separation wall due to the catalyst deterioration and a problem of the limited catalyst area. All of these factors can be a barrier for the practical utility.

In view of the above current situation, the objectives to be solved by the present invention is to provide a method for designing and arranging a structural catalyst for the decomposition of hydrocarbons, a reactor for the decomposition of hydrocarbons, a reaction furnace and a method for manufacturing the same for realizing more effective heat utilization compared to the conventional technique.

### [Means for solving problem]

An aspect of the present disclosure for helping to achieve the above goal is a reactor for the decomposition of hydrocarbons comprising: a structural catalyst for the decomposition of hydrocarbons having a structure in which a reaction gas may flow from one end to the other end when installed properly in a reaction chamber; and a heat source that is installed inside or outside said reaction chamber and capable of heating said structural catalyst for the decomposition of hydrocarbons, wherein said structural catalyst for the decomposition of hydrocarbons has a shape encompassing a boundary wall surface or a boundary side that separates said structural catalyst for the decomposition of hydrocarbons from said heat source when viewed from a cross-section vertical to a direction to which a reaction gas flows. According to such configuration, the reactor may have a structure capable of receiving not only a radiation heat radiated in a direction of the normal line but also a portion of radiation heat radiated in a direction other than the normal line on a surface of the same catalyst or a surface of an adjacent catalyst. This allows the reaction gas near a fluid film to be heated by a catalyst plate heated by a radiation heat and realizing more effective heat utilization.

In the reactor for the decomposition of hydrocarbons, said shape may preferably form a symmetrical curve or line with respect to a first normal line to said boundary wall surface or a second normal line to an imaginary cylindrical side face encompassing said boundary side, said curve or line starting from a certain point on said first or second normal line. The above configuration makes it possible to form a structure that allows radiation reflected or once absorbed on any surface of a catalyst and re-emitted to be possibly received on a surface of the same catalyst or a surface of another catalyst symmetrical with respect to the normal line, allowing for effective heat utilization in which radiation heat is utilized more effectively than ever.

The reactor for the decomposition of hydrocarbons may preferably contain a heat source in a heater container that occupies almost central part of said reaction chamber when viewed from a cross section vertical to a direction of flowing a reaction gas. The above configuration is advantageous for utilizing radiation heat because it has a smaller surface area to be heated compared to heating the outer circumference of the reaction chamber, and has a less heat dissipation due to a distance from low temperature atmosphere.

In the reactor for the decomposition of hydrocarbons, said heat source may preferably be a regenerative radiant tube burner and contained in a square-shaped heater container that occupies almost central part of said reaction chamber when viewed from a cross section vertical to a direction of flowing a reaction gas. The above configuration may effectively heat only a surface of the catalyst that contributes to the reaction, while taking advantage of the characteristics of the regenerative radiant tube burner with high heat efficiency.

Another aspect of the present disclosure for achieving the above goal is a reaction furnace for the direct decomposition of hydrocarbons comprising the reactor for the decomposition of hydrocarbons. The above configuration may not require the steam heater, raw material gas preheater, CO modifier apparatus or CCS apparatus, each of which is required for steam modification. The reaction furnace has an extremely smaller profile compared to the conventional hydrogen production apparatus. Further, from a viewpoint of heat balance etc., the above configuration is supposed to be advantageous because the preheating or pressurization of raw material gas etc. is unnecessary.

The reaction furnace for the direct decomposition of hydrocarbons may further comprise a second structural catalyst with which unreacted reaction gas coming out from said other end may contact by convection. The above configuration allows us to reduce the proportion of unreacted reaction gas and improve conversion rate while maintaining a certain production speed by the combination of the second structural catalyst capable of contacting the reaction gas by convection with so-called the transparent structural catalyst in which the reaction gas may flow from one end to the other end.

The reaction furnace for the direct decomposition of hydrocarbons may further comprise a hydrogen purification module for reducing a hydrogen pressure in said reaction furnace and promoting the decomposition of hydrocarbons by selectively discharging hydrogen in said reaction furnace. The above configuration allows us to reduce the hydrogen concentration in a furnace to drive the reaction for the direct decomposition of hydrocarbons to hydrogen production side.

Another aspect of the present disclosure for achieving the above goal is a method for designing and arranging a structural catalyst for the decomposition of hydrocarbons, comprising the steps of: determining a shape of reaction chamber and a shape and an arrangement of a heat source inside or outside said reaction chamber; arranging a structural catalyst for the decomposition of hydrocarbons with a first shape in a first position of a first coordinate system; calculating or measuring a radiation heat (E1) received per unit time by said structural catalyst for the decomposition of hydrocarbons with said first shape; modifying a shape of said structural catalyst for the decomposition of hydrocarbons with said first shape and/or moving said coordinate system; ensuring that a reaction gas may flow from one end to the other end when said structural catalyst for the decomposition of hydrocarbons after modifying a shape and/or moving said coordinate system is installed in a reaction chamber; and ensuring that a radiation heat (E2) received per unit time by said structural catalyst for the decomposition of hydrocarbons after modifying a shape and/or moving said coordinate system may become greater than said radiation heat (E1) received per unit time by said structural catalyst for the decomposition of hydrocarbons with said first shape. The above designing and arranging method may design and arrange a catalyst capable of heating more locally and mainly on a catalyst surface to high temperature by radiated heat even in the same catalyst area, and it may realize the effective heat utilization with disregard to the other heating factors such as heat transmission or convection from reaction gas. Furthermore, such method allows us to optimize the shape and the arrangement of of the structural catalyst for the decomposition of hydrocarbons by the repeated shape deformation and radiated heat assessment of structural catalyst for the decomposition of hydrocarbons on condition that E2-E1 be a positive value.

Another aspect of the present disclosure for achieving the above goal is a method for manufacturing a reactor for the decomposition of hydrocarbons comprising said method for designing and arranging a structural catalyst for the decomposition of hydrocarbons. The above production method may produce a catalyst capable of heating more locally and mainly on a catalyst surface to high temperature by radiated heat even in the same catalyst area, and it may realize the effective heat utilization with disregard to the other heating factors such as heat transmission or convection from reaction gas.

### [Effects of the Invention]

The present invention allows us to provide heat directly on a surface of a catalyst, and elevate the temperature of the vicinity of nearly a fluid film of the catalyst that occurs the actual chemical reaction up to the reaction temperature, and improve the heat efficiency of the structural catalyst for the decomposition of hydrocarbons, and decrease the temperature of the reaction furnace, and in some cases use a low-cost structural material with low heat resistance as a material for the reaction furnace.

### [Brief Description of the Drawing(s)]

[FIG. 1] A cross-sectional view of the first embodiment of the reactor for the decomposition of hydrocarbons of the present invention taken along B-B line.
[FIG. 2] A enlarged cross-sectional view taken along A-A line inside the cylinder with open bottom end of FIG. 1.
[FIG. 3A] A side face photo of the catalyst arrangement of the second embodiment.
[FIG. 3B] An end view of catalyst arrangement of the second embodiment taken along A-A line.
[FIG. 4] A cross-sectional view of the catalyst arrangement of the third embodiment from a cross-section vertical to a direction of flowing a reaction gas.
[FIG. 5A] A side view of the catalyst arrangement of the fourth embodiment taken along C-C line.
[FIG. 5B] A cross-sectional view of the catalyst arrangement of the fourth embodiment taken along A-A line.
[FIG. 5C] A cross-sectional view of the catalyst arrangement of the fourth embodiment taken along B-B line.
[FIG. 6] A schematic view of reaction furnace of the fifth embodiment.
[FIG. 7] A cross-sectional view showing the arrangement of the decorated catalyst plates of Example 1.
[FIG 8] A graph showing the results of Experimental Example 1.
[FIG 9] A graph showing the results of Experimental Example 3.
[FIG 10] A cross-sectional view showing an example of the conventional catalyst configuration.

### [Detailed description of the preferred embodiments]

Hereinafter, the "terminology" used herein is defined.

The "structural catalyst for the decomposition of hydrocarbons" used herein refers to the structural catalyst for the whole or a part of the reaction process of the steam modification reaction of hydrocarbons or for the whole or a part of the reaction process of the reaction of direct composition of hydrocarbons. Hydrocarbons may preferably be methane, ethane, propane or naphtha.

The "structural catalyst" used herein is a catalyst in which a structure selected from a sheet (including a flat sheet and the other ones in which a flat sheet is subjected to any processing such as bending, folding, punching, notching embossing), a porous body, a honeycomb (monolith type), a felt, a mesh, a fabric or an expanded metal itself serves as a catalyst, or a structure-based catalyst. The structure-based catalyst generally refers to the one that immerses a substrate having a honeycomb geometry etc. into a slurry comprising a catalytic component. Alternatively, it may have an exposed, unsupported catalyst layer (plated layer, spraying layer) by spraying or plating etc. on the structure.

The "direction of flowing the reaction gas" used herein means a direction that generally represents a linear or curvilinear flow of a reaction gas in a reaction chamber with a distant view. Therefore, it should be noted that a local or microscopic flow path change does not always match the direction of flowing the reaction gas with a distant view even if we can observe such local or microscopic path change in the reaction gas flow by placing a baffle plate on a flow path or subjecting a catalyst to decorative processing in order to promote contacts by stirring.

The "boundary wall surface" used herein refers to a macroscopic, geometric boundary wall surface to define a linear heat radiator and/or a normal vector. Therefore, it does not take into account the fine surface condition of the wall surface. Further, the "boundary wall surface" may be a surface of a heated source, or a wall surface of a cylindrical separation wall or a hollow separation wall with a square cross-section that separates a space in the reaction chamber from a heated source.

The "boundary side" used herein means each side where a heat source or a separation wall has a rectangular shape or a square shape when viewed from a cross-section vertical to a direction of flowing a reaction gas.

The "imaginary cylindrical side face" used herein refers to the side face of an imaginary cylinder when imagining an imaginary cylinder including a boundary side.

The "normal line to said boundary wall surface or said normal line to an imaginary cylindrical side face encompassing said boundary side" used herein refers to selected specific normal line(s), not every normal line.

An explanation is given hereinafter to the embodiments of the present disclosure in reference to drawings.

### (First embodiment-Apparatus in which the catalysts are arranged symmetrically with respect to the normal line)

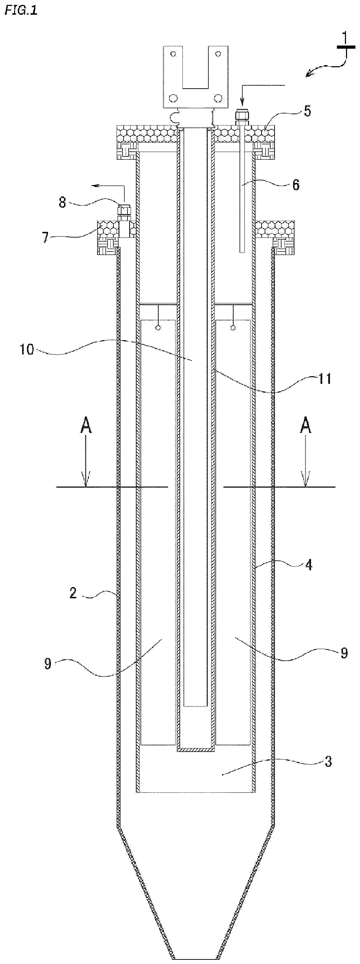

A typical reactor 1 for the decomposition of hydrocarbons as shown in FIG.1 has a structure where the cylinder 4 with open bottom end is inserted in the container 2 for discharging product so as to define the section 3 where the reaction for the decomposition of hydrocarbons takes place. The reactor 1 further comprises: pipe 6 penetrating the lid 5 located at the upper part of the cylinder 4 with open bottom for supplying a reaction gas to the upper part of the cylinder 4; discharging pipe 8 penetrating the lid 7 located at the upper part of the container 2 for discharging gas including produced gas; structural catalyst 9 for the decomposition of hydrocarbons having a structure in which a reaction gas may flow from one end to the other end when installed in the cylinder 4; bottomed cylinder 11 penetrating the center of the lid 5 of the cylinder 4 and extending downward in a vertical direction; and the heat source 10 contained in the bottomed cylinder 11.

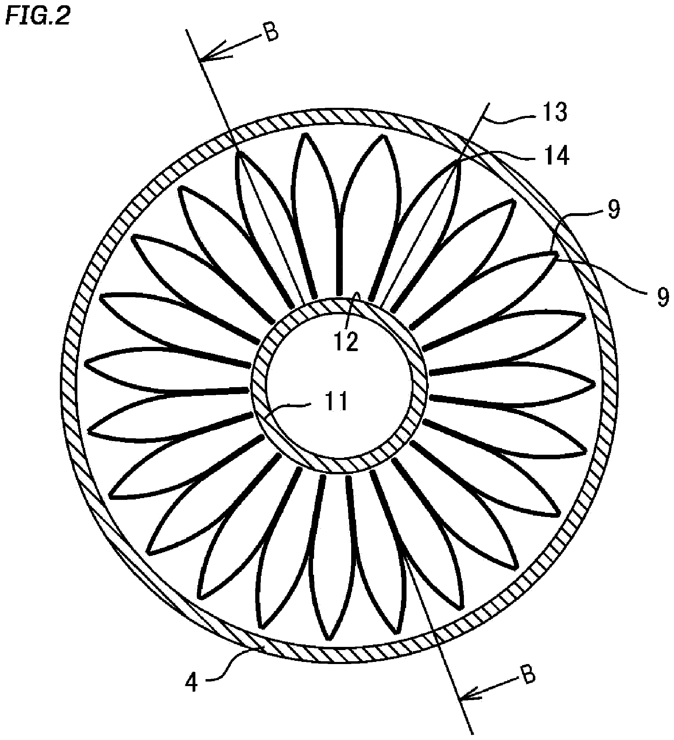

The structural catalyst 9 for the decomposition of hydrocarbons of the embodiment has a Chrysanthemum bloom-like contour when viewed from a cross-section vertical to a direction to which a reaction gas flows and surrounds the outer wall surface (boundary wall surface) of the bottomed cylinder 11, as shown in FIG.2. Chrysanthemum bloom is made up of 23 sets of petals, each of which is obtained by opposing two curved catalysts, in which adjacent petals are combined with each other to integrate from an inner side edge to a central part. A petal has its edge point 14 on the normal line 13 to the boundary wall surface 12 and starting from the edge point, it forms a symmetrical curve with respect to the normal line 13. When viewed from a side face, two curved catalysts butt the respective sides at a portion corresponding to the edge of a petal.

### (Second embodiment-Apparatus in which the catalysts are arranged symmetrically with respect to normal line)

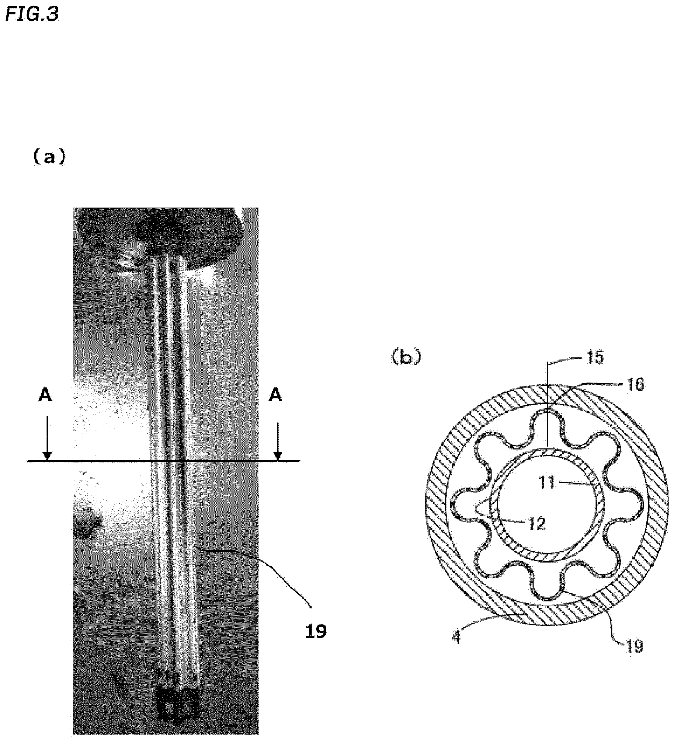

The second embodiment of FIG. 3A differs from the first embodiment in that the cylindrical-shaped structural catalyst for the decomposition of hydrocarbons 19 encompassing bottomed cylinder 11 is corrugated as shown in FIG. 3B when viewed from a cross-section vertical to a direction to which a reaction gas flows. In such configuration, the catalyst 19 forms a symmetrical curve or line with respect to the normal line 15 to the boundary wall surface 12, said curve or line starting from one point 16 on the normal line 15 when viewed from a cross-section vertical to the vertical direction of flowing a reaction gas.

### (Third embodiment-Apparatus in which the catalysts are arranged asymmetrically with respect to normal line)

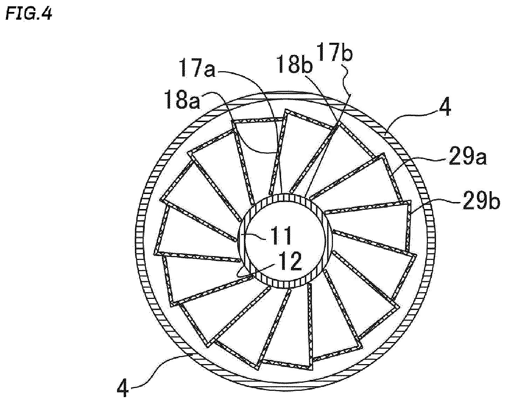

The third embodiment of FIG.4 differs from the first embodiment in that 15 sets of L-shaped bent catalysts 29 are arranged around the circumference of the bottomed cylinder 11 when viewed from a cross-section vertical to a direction of flowing a reaction gas, so as not to form any clearance between adjacent catalyst plates 29a, 29b, thereby encompassing the boundary wall surface 12. In such configuration, the catalysts 29 traverse obliquely the normal lines 17a, 17b to the boundary wall surface 12 and form asymmetrical lines with respect to the normal lines, said curve or line starting from the points 18a, 18b on the normal lines 17a, 17b to the boundary wall surface 12.

### (Fourth embodiment - Apparatus comprising catalyst around regenerative radiant tube burner)

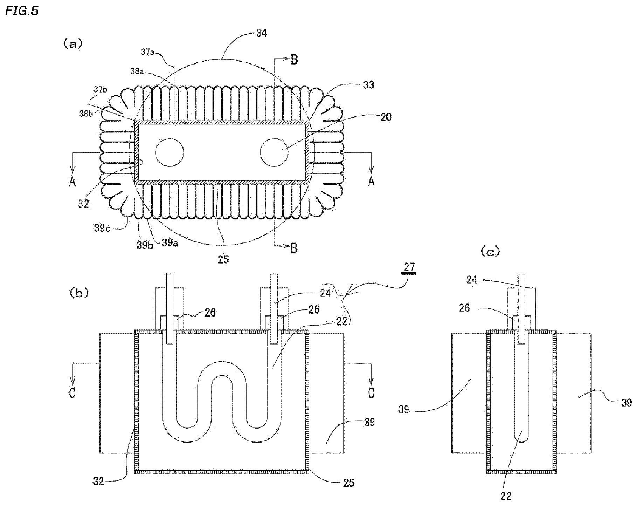

In fourth embodiment shown in FIG. 5, heat source 20 is a regenerative radiant tube burner 27 comprising: a radiant tube 22 having nearly a W-shaped in a side view; a pair of gas burners 24 disposed in both ends of the radiant tube 22; and a pair of heat accumulators 26 disposed in both ends of the radiant tube 22. The burner 27 is contained in a cuboid heater container 25 with its entire tube 22 being contained therein. The reaction gas flow is directed into the page of FIG.5A, and directed into the page of FIG. 5B and FIG.5C. In the surroundings of four wall surfaces and four sides of heater container 25, the U-shaped and horseshoe-shaped structural catalysts for the decomposition of hydrocarbons 39 are closely arranged with their openings being directed in the same direction so as not to make a gap between the catalysts 39a, 39b, 39c adjacent to each other when viewed from a cross-section vertical to a direction of flowing a reaction gas. In such configuration, the catalysts 39a, 39b, 39c include: the one that forms a symmetrical curve with respect to the normal line 37a to the boundary wall surface 32, starting from one point 38a on the normal line 37a; as well as the one that forms an asymmetrical curve with respect to the normal line 37b to the imaginary cylindrical side face 34 encompassing the boundary side 33, starting from one point 38b on the normal line 37b, when viewed from a cross-section vertical to the vertical direction of flowing a reaction gas, as shown in FIG.5A.

### (Fifth embodiment - reaction furnace in which a plurality of standardized catalyst module is contained)

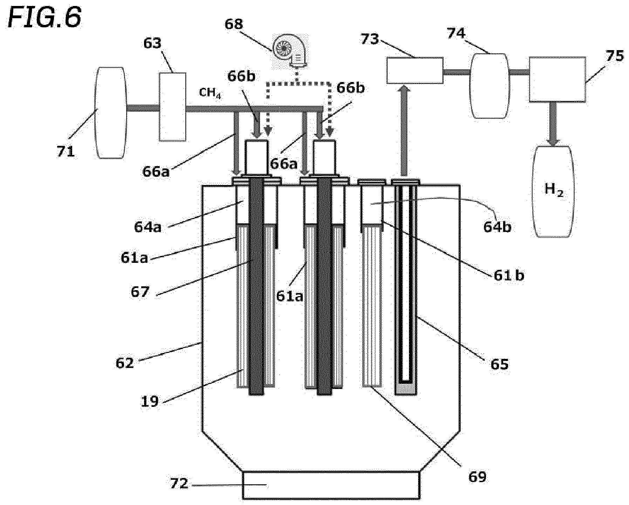

As shown in FIG. 6, the reaction furnace 62 of the fifth embodiment comprises the reactor 61a for the decomposition of hydrocarbons, the catalyst module 61b and the partial separation apparatus 65.

The reactor 61a for the decomposition of hydrocarbons is made up of: a heat source of radiant tube burner 67; a corrugated catalyst 19 as shown in FIG. 3 (first structural catalyst) arranged to encompass the surrounding of the burner 67; and a guide cylinder 64a capable of introducing a reaction gas with the upper end of the corrugated catalyst 19 being contained. The reactor is one kind of gas flow through-type catalyst since raw material gas passes from the upper end to the bottom end of corrugated catalyst 19, however, differing from the cylinder 4 with open bottom of FIG. 1, the guide cylinder 64a has a sleeve shape that covers the upper end of the catalyst, so that raw material gas poured out from the bottom end of corrugated catalyst 19 may also contact with the outside of corrugated catalyst 19 and spread over the entire reaction furnace 62.

Catalyst module 61b differs from the reactor 61a for the decomposition of hydrocarbons in that it comprises: the second structural catalyst 69 with which unreacted reaction gas coming out from the bottom end of the reactor 61a may contact by convection; and the holding cylinder 64b for holding the upper part of the second structural catalyst 69, and the second structural catalyst 69 does not encompass the burner 67.

The second structural catalyst 69 may be made of a material the same as or different from that of the first structural catalyst 19. Since there is no need for a heat source in the center encompassed by a structural body, it is permitted to select a structure which is different from the structure of the first structural catalyst 19 as the second structural catalyst from a sheet (including a flat sheet and the other ones in which a flat sheet is subjected to any processing such as bending, folding, punching, notching embossing), a porous body, a honeycomb (monolith type), a felt, a mesh, a fabric or an expanded metal. The second structural catalyst 69 may be installed opposite the gas flow-through catalyst and heated by utilizing radiation heat emitted from gas flow-through catalyst, or heated by heating its surface through the convection of high-temperature gas in furnace.

To the upper end of the reaction furnace 62 connected is the pipe 66a for supplying a reaction gas capable of supplying the reaction gas to said reactor 61a for the decomposition of hydrocarbons. Furthermore, the reactor 61a for the decomposition of hydrocarbons comprises the pipe 66b for introducing combustion gas to the burner 67 and the blower 68 for supplying air.

The desulfurizer 63 is disposed between raw material gas supplying pipe 66a and raw material gas supply source 71. The desulfurizer 63 can remove sulfur compounds added as an odorant to city gas or LPG and prevent the poisoning or performance loss of structural catalyst.

To the bottom end of the reaction furnace 62 connected is the apparatus 72 for discharging and recycling produced carbon produced in said reactor 61a for the decomposition of hydrocarbons and the catalyst module 61b.

A typical discharging and recovering apparatus is shown in Patent Literature 4, which comprises: a depressurization chamber communicating with a lower opening of the reactor via a ventilation hole; a first valve capable of opening and closing said ventilation hole; a collection box communicating with the depressurization chamber via a channel; a second valve capable of opening and closing said depressurization chamber; and a depressurization pump communicating with the collection box.

The partial purification apparatus 65 is an apparatus for decreasing hydrogen concentration inside the reaction furnace 62 and increasing hydrogen concentration to be discharged outside the reaction furnace 62 compared to the inside of the reactor. The materials may include, but is not limited to: ceramic materials such as α-alumina, γ-alumina, silica, zirconia, silicon nitride, silicon carbide, titania and zeolite; and pore-size controlled silica film, palladium (Pd) film, palladium alloy (PdAg, PdCu etc.) film, vanadium film, zirconium/nickel alloy film, zeolite film etc., each film being carried or supported by a porous substrate consisting of metal materials such as nickel, copper, iron, zinc and alloys thereof, as disclosed in Japanese Patent Application Publication No. 2020-142160 and Japanese Patent Application Publication No. 2006-007134.

Produced gas with high hydrogen concentration passing through the partial purification apparatus 65 is temporarily stored in the tank 74 by use of the pump 73 and purified by the pressure swing adsorber (PSA) 75, and finally producing product hydrogen. Pressure swing adsorption (PSA) may be commercially available.

Methane separated from PSA 75 is sent back to the pipe 66 for introducing combustion gas via the return pipe not shown to recycle as the reaction gas.

### (Method for designing and arranging a structural catalyst for the decomposition of hydrocarbons)

Another aspect of the present invention is a method for designing and arranging a structural catalyst for the decomposition of hydrocarbons (hereinafter referred to as "the Method"). Each step is hereinafter elaborated.

The method comprises the step (S 1) of determining a shape of reaction chamber as well as a shape and an arrangement of a heat source inside or outside said reaction chamber. The reaction chamber may have a shape of a typical reaction chamber of a tube-type reactor, a fixed-bed reactor or a packed-bed catalytic reactor. The heat source may have a bottomed cylindrical shape arranged in such a manner that occupies almost the central part of the reaction chamber when viewed from a cross-section vertical to a direction of flowing a reaction gas.

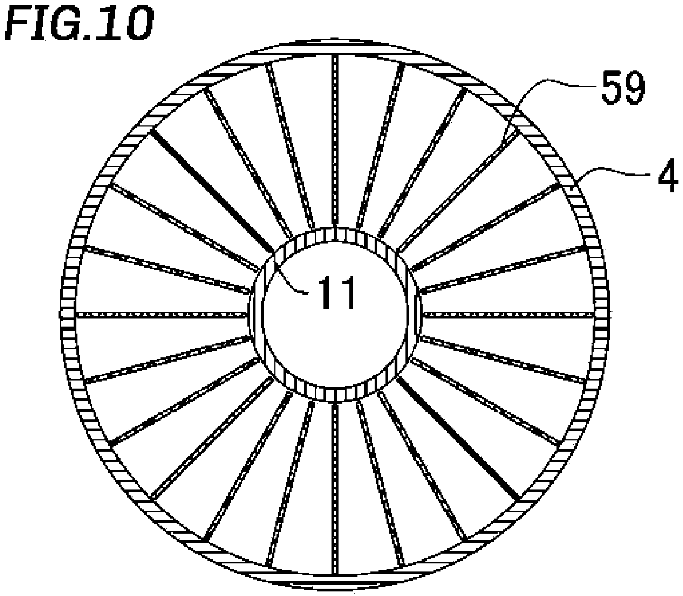

The method comprises the step (S2) of arranging a structural catalyst for the decomposition of hydrocarbons with a first shape in a first position of a first coordinate system. In the initial setting in this step, as shown in FIG. 10, providing that a plate catalyst be a first shape, such plate catalysts are arranged radially as the first position of the first coordinate system when viewed from a cross-section vertical to a direction of flowing a reaction gas, i.e. on a plane including normal lines to the boundary wall surface that separates heat source and reaction chamber. Alternatively, the first shape may be made into a cylindrical shape with both ends being opened.

The method comprises the step (S3) of calculating or measuring a radiation heat (E1) received per unit time by said structural catalyst for the decomposition of hydrocarbons with said first shape. When calculating radiation heat in this step, the emissivity of object is determined on the basis of known data, and the radiation heat is then calculated according to the Stephan Boltzmann's law using the emissivity determined. In actual measurement, we can estimate radiation heat by observing temperature distribution and temperature elevation speed of each portion of catalyst surface by use of thermography and thermocouples. Particularly in the actual measurement, it is preferable to subject the reaction chamber to radiation heat in vacuum, so that we can disregard the other heating factors such as heat transmission or convection from reaction gas. Alternatively, we can subject the reaction chamber to radiation heat with a reaction gas being filled or flowed through so as to simulate actual condition.

The method comprises the step (S4) of modifying a shape of said structural catalyst for the decomposition of hydrocarbons with said first shape and/or moving said coordinate system. In this step, the deformation is actually deformed in actual measurement. The movement of the coordinate system may be achieved by e.g. the positional change or the tilt angle change on a rack. The positional change or the tilt angle change may be achieved by disposing a large diameter ring and a small diameter ring on each of the upper end and the lower end of a rack, and disposing a bridge connecting the large diameter ring and the small diameter ring radially in a radial direction, forming teeth on each bridge at a certain interval with the bridge of the upper end and the bridge of the lower end being opposed to each other, a position between adjacent teeth that sandwiches the upper side and lower side of the catalyst is independently changed between the upper end and the lower end. In calculation, the shape of the catalyst may be achieved by the deformation on a computer and the movement of the coordinate system of the catalyst.

The method comprises the step (S5) of ensuring that a reaction gas may flow from one end to the other end when said structural catalyst for the decomposition of hydrocarbons after modifying a shape and/or moving said coordinate system is installed in a reaction chamber. The gas flowing may be confirmed, for example, by making an imaginary inlet of reaction gas and an imaginary catalyst at certain positions of an imaginary reaction chamber on a computer and simulating whether a fluid may move from one end to the other end of catalyst, otherwise by making an inlet of reaction gas at certain positions of actual reaction chamber and seeing whether the reaction gas may flow from one end to the other end of catalyst. Additionally, in the case of simulation, the inlet of reaction gas may be moved in the reaction chamber to the extent of design constraints while moving a coordinate system of a structural catalyst for the decomposition of hydrocarbons to ensure that the reaction gas may flow from one end to the other end.

The method comprises the step (S6) of ensuring that a radiation heat (E2) received per unit time by said structural catalyst for the decomposition of hydrocarbons after modifying a shape and/or moving said coordinate system may become greater than said radiation heat (E1) received per unit time by said structural catalyst for the decomposition of hydrocarbons with said first shape. To see whether radiation heat may increase, in the case of actual measurement, you may compare temperature distribution and temperature elevation speed at the same position where E1 was measured on a catalyst surface by use of thermography and thermocouples. In the case of calculation, the emissivity of object is determined on the basis of known data, and the radiation heat is then calculated according to the Stephan Boltzmann's law using the emissivity determined.

Hereinafter, a detailed discussion is given to the examples of an apparatus utilizing the aforementioned structural catalyst.

### (Experimental Example 1 - Reaction test in an internal-heating type reaction furnace by use of decorative catalyst plate)

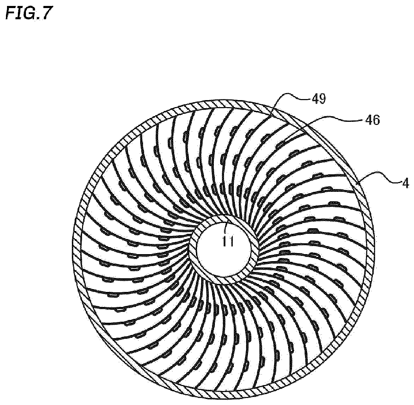

The heater container 11 containing 2kW heater (manufactured by Sanyo Netsu Kogyo Co., Ltd.) was inserted in a center axis of vertical direction of cylindrical SUS304-made flow-through-type small reaction furnace. The 46 sets of catalyst plate 49 (nickel-based metal catalyst) having a thickness of 0.6 mm, a width of 37 mm and a length of 200 mm are arranged and fixed around the circumference of heater container 11 so as to be disposed in a same direction to be curved with a same curvature as shown in FIG. 7 when viewed from a cross-section vertical to a direction of flowing methane, and the projections 46 were made on the catalyst plate 49 for promoting contacts by stirring. The total geometric area of catalysts was 0.68 m²for both sides.

After elevating the reaction furnace temperature close to 600°C, the experiment of methane direct decomposition reaction was performed at a heater temperature of 950 to 1000°C for about 2 hour and 25 minutes while introducing methane at a pressure of 0.3MPa and a flow rate of 1000mL/min from the methane supplying pipe penetrating the lid of furnace so as to make a methane flow parallel to the catalyst.

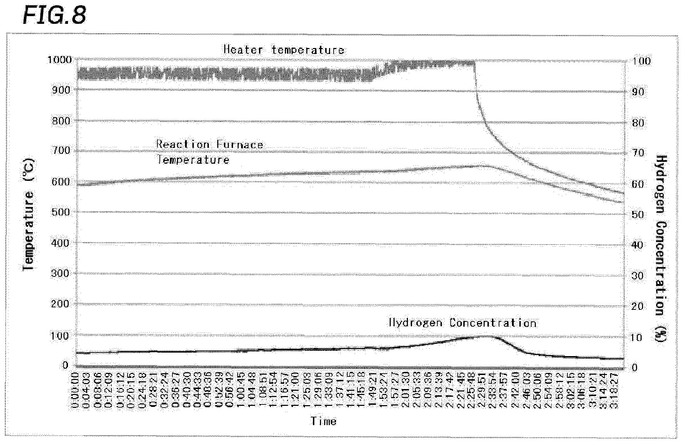

The hydrogen concentration was monitored by installing the gas thermal conduction-type gas analyzer (zero gas: city gas 13A, span gas: 100% hydrogen, gas flow rate: 1.0 L/min, manufactured by CHINO Corporation) on the discharging pipe of produced gas 8 disposed in the bottom end of the side wall of the reactor for discharging a produced gas in the air. The results are shown in FIG. 8. The heater temperature was getting close to 950°C, however, the reaction furnace temperature was as low as 650°C. The fluid film of catalyst plate 49 was insufficiently heated. Thus the hydrogen production efficiency was low.

The experiment was stopped since the hydrogen production efficiency of catalyst increased by at most 10% even when the heater temperature was elevated along the way from 950°C to 1000°C.

### (Experimental Example 2 - Radiation heating test where the catalysts are arranged in a Chrysanthemum bloom-like manner when viewed from a cross-section)

A pair of catalyst plates having the same size as Experimental Example 1 were inflected as opposed to each other and 23 sets of the opposed plates were arranged around heater container. The opposed sides of the adjacent plates were subjected to butt welding and bonded to make a Chrysanthemum bloom-like contour (FIG.2) when viewed from a cross-section vertical to a direction of flowing methane.

In an open air, heater in heater container was energized and the catalyst was observed via thermography. The heater heat was uniformly spread over the entire surface that received heat radiation (radiation heat) from the vicinity of the base to the edge of petals. It was found that the structural catalyst for the decomposition of hydrocarbons drew a curve or a line symmetrical to a normal line to said boundary wall surface, said curve or line starting from one point on the normal line when viewed from a cross-section vertical to a direction of flowing a reaction gas, which was a shape in which one catalyst plate could also easily receive heat radiation reflected on the surface of another catalyst plate. On the other hand, a surface had a lower temperature than the other surface opposite to a surface of the catalyst plate on which heat radiation is received. It was found that the local heating on the surface of the catalyst plate occurred.

### (Experimental Example 3 - Reaction test in an internal-heating type reaction furnace where the catalysts are arranged as in FIG. 2)

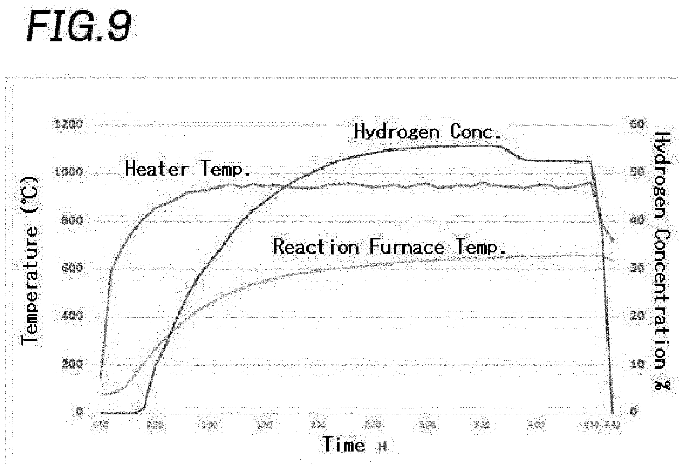

The catalysts having a geometric total area of 0.68 m² (for both sides) arranged in a manner of Experimental Example 2 and the heater were contained in a center axis of vertical direction of cylindrical flow-through-type small reaction furnace, and via methane flow path introduced was methane having a methane supply pressure of 0.3 MPa and a methane flow rate of 1 L/min to conduct the experiment of methane direct decomposition reaction. As a result, regardless of the fact that the reaction furnace has the same geometric total area of the catalyst and the same heater capacity as in the case of the internal heating reaction furnace of Experimental Example 1 as shown in FIG.9, hydrogen production amount was better, heater temperature was 1000°C and the reaction furnace temperature was 650°C and the hydrogen concentration was 55%. It was suggested that it was essential to optimize the arrangement of catalyst plates in a manner that could easily receive radiation heat and promote local heating of the catalyst plates' surface.

One of ordinary skill in the art would understand that the embodiments for carrying out the present disclosure are not at all limited to the above explicitly described embodiments. In addition, all the elements explained in the above embodiments are not essential elements for the present disclosure. The present disclosure may go through various modifications insofar as the modifications fall within the technical scope and to the extent that falls within the technical idea. For example, in the fourth embodiment, heater container 25 is not always necessary. The heat efficiency is better without it. As shown in a system where the regenerative radiant tube is arranged in the vacuum heat treatment furnace as is, the container is unnecessary as long as the burner be airtight. Further, only the upper part of the second structural catalyst 69 is contained in the holding cylinder 64b, whereas the reaction furnace 62 may be exposed.

### [Industrial applicability]

The reactor for the decomposition of hydrocarbons of the present invention may be followed by an apparatus that increases the purity of hydrogen contained in a produced gas, which allows us to apply for hydrogen supply to fuel cell cars equipped with polymer electrolyte fuel cell (PEFC) via on-site station etc.

Further, in recent years, the spotlight is on Solid Oxide Fuel Cell (SOFC) that is capable of directly utilizing methane via city gas infrastructure in addition to hydrogen. In SOFC, there has been a concern regarding the decrease in performance due to an electrode reaction inhibiting effects caused by the precipitation of carbon produced from the thermal decomposition reaction of methane on a metal nickel surface or the adsorption of a produced CO on a metal nickel surface (Satoh et al., "Fuel Cells - From a viewpoint of methane utilization techniques", J. Plasma Fusion Res. Vol.87, No.1, (2011) pp.36-41). It is expected, however, that the use of the reactor for the decomposition of hydrocarbons of the present invention as a fuel modifier disposed in the upstream of SOFC may result in the decrease in precipitated carbon in SOFC or long lifetime.

### [Explanation of Symbols]

- 1, 61a: Reactor for the decomposition of hydrocarbons
- 61b: Catalyst module
- 62: Reaction furnace
- 2: Container for discharging product
- 3: Reaction section
- 4: Cylinder with open bottom end
- 5, 7: Lid
- 6, 66a: Pipe for supplying a reaction gas
- 8: Discharging pipe
- 9, 19, 29, 39a, 39b, 39c, 49, 59, 69: Structural catalyst for the decomposition of hydrocarbons
- 10, 20: Heat source
- 11: Bottomed cylinder (Heater container)
- 12: Boundary wall surface
- 13, 15, 17a, 17b, 37a, 37b: Normal line
- 14, 16, 18a, 18b, 38a, 38b: Intersection between catalyst and normal line
- 22: Radiant tube
- 24: Gas burner
- 25: Heater container
- 26: Heat accumulator
- 27, 67: Burner
- 33: Boundary side
- 34: Imaginary cylinder side face
- 46: Projection
- 63: Desulfurizer
- 64a: Guide cylinder
- 64b: Holding cylinder
- 65: Partial purification apparatus
- 66b: Pipe for introducing combustion gas
- 68: Blower
- 71: Raw material gas supply source
- 72: Apparatus for discharging and recycling produced carbon
- 73: Pump
- 74: Tank
- 75: PSA

## Claims

1. A reactor for the decomposition of hydrocarbons comprising: a structural catalyst for the decomposition of hydrocarbons having a structure in which a reaction gas may flow from one end to the other end when installed properly in a reaction chamber; and
a heat source that is installed inside or outside said reaction chamber and capable of heating said structural catalyst for the decomposition of hydrocarbons,
wherein said structural catalyst for the decomposition of hydrocarbons has a shape encompassing a boundary wall surface or a boundary side that separates said structural catalyst for the decomposition of hydrocarbons from said heat source when viewed from a cross-section vertical to a direction of flowing a reaction gas.

2. The reactor for the decomposition of hydrocarbons of Claim 1, wherein said shape forms a symmetrical curve or line with respect to a first normal line to said boundary wall surface or a second normal line to an imaginary cylindrical side face encompassing said boundary side, said curve or line starting from a certain point on said first or second normal line.

3. The reactor for the decomposition of hydrocarbons of Claim 1 or Claim 2, wherein said heat source is contained in a heater container that occupies nearly the central part of said reaction chamber when viewed from a cross section vertical to a direction of flowing a reaction gas.

4. The reactor for the decomposition of hydrocarbons of Claim 3, wherein said heat source is a regenerative radiant tube burner and contained in a square-shaped heater container that occupies nearly the central part of said reaction chamber when viewed from a cross section vertical to a direction of flowing a reaction gas.

5. A reaction furnace for the direct decomposition of hydrocarbons comprising said reactor for the decomposition of hydrocarbons according to Claim 1.

6. The reaction furnace for the direct decomposition of hydrocarbons of Claim 5, comprising a second structural catalyst with which unreacted reaction gas coming out from said other end may contact by convection.

7. The reaction furnace for the direct decomposition of hydrocarbons of Claim 5 or Claim 6, further comprising a hydrogen purification module for reducing a hydrogen pressure in said reaction furnace and promoting the decomposition of hydrocarbons by selectively discharging hydrogen in said reaction furnace.

8. A method for designing and arranging a structural catalyst for the decomposition of hydrocarbons, comprising the steps of: determining a shape of reaction chamber and a shape and an arrangement of a heat source inside or outside said reaction chamber;
arranging a structural catalyst for the decomposition of hydrocarbons with a first shape in a first position of a first coordinate system;
calculating or measuring a radiation heat (E1) received per unit time by said structural catalyst for the decomposition of hydrocarbons with said first shape;
modifying a shape of said structural catalyst for the decomposition of hydrocarbons with said first shape and/or moving said coordinate system;
ensuring that a reaction gas may flow from one end to the other end when said structural catalyst for the decomposition of hydrocarbons after modifying a shape and/or moving said coordinate system is installed in a reaction chamber; and
ensuring that a radiation heat (E2) received per unit time by said structural catalyst for the decomposition of hydrocarbons after modifying a shape and/or moving said coordinate system may become greater than said radiation heat (E1) received per unit time by said structural catalyst for the decomposition of hydrocarbons with said first shape.

9. A method for manufacturing a reactor for the decomposition of hydrocarbons comprising said method of Claim 8 for designing and arranging a structural catalyst for the decomposition of hydrocarbons.
